# EUROPEAN PATENT SPECIFICATION

(11) **EP 1 960 316 B1**
(45) Date of publication and mention of the grant of the patent: **05.08.2009**
(21) Application number: 06830516.8
(22) Date of filing: 11.12.2006
(51) Int. Cl.: C02F 3/12

(54) **PROCESS AND INSTALLATION FOR TREATING WASTE WATER**
VERFAHREN UND ANLAGE ZUR BEHANDLUNG VON ABWASSER
PROCESS ET INSTALLATION DE TRAITEMENT D'EAUX USEES

(30) Priority: 09.12.2005 EP 05077815
(43) Date of publication of application: 27.08.2008
(73) Proprietor: Aquafin N.V., 2630 Aartselaar (BE)
(72) Inventor: DE WILDE, Wouter, B-2050 Antwerpen (BE); BOONEN, Ivo, B-2660 Hoboken (BE); PARMENTIER, Gunther, B-9190 Stekene (BE); HELLINCK, Nathan, B-9940 Evergem (BE); THOEYE, Chris, B-9000 Gent (BE)
(74) Representative: Van Reet, Joseph
(86) International application number: PCT/EP2006/069543
(87) International publication number: WO 2007/065956

(56) References cited:
- WO-A2-03/029152
- US-A1- 2001 000 007
- US-B1- 6 723 244

## Description

The present invention relates to a process for treating wastewater as defined in the preamble of claim 1 and to an installation for treating wastewater as defined in the preamble of claim 14. The wastewater is treated in at least one bioreactor system in the form of a mixed liquor containing activated sludge and at least a portion of the effluent of the bioreactor system is filtrated in a membrane filtration system and, at least when the wastewater influent flow rate is too high for the membrane filtration system, a further portion of the bioreactor effluent is clarified in at least one settling tank.

The process more particularly comprises the steps of:
- feeding the wastewater at a flow rate Q_{inf} to a bioreactor system;
- leading the wastewater in the form of a mixed liquor containing activated sludge through the bioreactor system, the mixed liquor leaving said bioreactor system as a bioreactor effluent which has a mixed liquor suspended solids content MLSS_{bio};
- performing the wastewater treatment in accordance with a first mode, for a flow rate Q_{inf} which is within a first range, and in accordance with a second mode, for a flow rate Q_{inf} which is within a higher, second range and switching between both modes depending on the magnitude of Q_{inf};
- supplying both in said first and in said second mode at least a portion of the bioreactor effluent to a membrane filtration system wherein said portion of the bioreactor effluent is filtrated to produce a purified waste water stream at a flow rate Q_{eff,ft} and a mixed liquor retentate which has a mixed liquor suspended solids content MLSS_{ft};
- recycling both in said first and in said second mode at least a portion of said mixed liquor retentate at a flow rate Q_{r,ft} to said bioreactor system; and
- supplying at least in said second mode a further portion of the bioreactor effluent to a settling tank system which comprises at least one settling tank wherein said further portion of the bioreactor effluent is clarified to produce a further purified waste water stream and a further mixed liquor containing settled activated sludge, at least a portion of the further mixed liquor being recycled at a flow rate Q_{r,st,bio} to said bioreactor system.

In general a wastewater treatment process can comprise mechanical, physico-chemical or biological processes and each combination thereof. Examples of mechanical processes are (i) removal of grit material or other particulate matter by screening, (ii) removal of sand in a sand trap, (iii) removal of particulate matter in a settling tank using gravitation, etc. Examples of physico-chemical processes are (i) precipitation of phosphate or sulphide by dosing Fe(2+) or Fe(3+) salts, (ii) coagulation or flocculation of suspended matter by dosing coagulating or flocculating agents, etc. Examples of biological processes are (i) microbial removal of chemical oxygen demand (COD) or biological oxygen demand (BOD), (ii) microbial removal of nitrogen, (iii) microbial removal of phosphate, etc..

Said mechanical, physico-chemical or biological processes can be operated in separate or in combined process units. An example of a combined process unit is the dosing of Fe(3+) salts for precipitation of phosphate in a settling tank for settling and separation of the precipitated phosphate.

A biological wastewater treatment process usually involves activated sludge or biofilm processes that take place in what is further referred to as a bioreactor, that consists of one or more process units or compartments, or as a bioreactor system which comprises one or more bioreactors. When using activated sludge, the wastewater is mixed with activated sludge resulting in a stream further referred to as mixed liquor, and that is led through the bioreactor. The mixing occurs usually in a process unit that is usually referred to as the selector. In general the mixed liquor can be described as a complex aqueous suspension or solution of inorganic and organic matter. The organic matter is in part comprised of microbial active organisms of the activated sludge that are involved in the biological processes such as e.g. BOD removal, COD removal, nitrogen removal, phosphorus removal, etc. for treatment of the wastewater. The microbial active organisms in activated sludge are at least in part grouped in a structure of flocs suspended in the mixed liquor.

The concentration of activated sludge in mixed liquor is usually expressed as Mixed Liquor Suspended Solids (MLSS), e.g. 4 g MLSS/I. For determining the MLSS value of mixed liquor, standard methods exist corresponding to the determination of Total Suspended Solids (TSS) in the mixed liquor. The determination of TSS is described for example in "Eaton A.D., Clesceri L.S. & Greensberg A.E. (1995). Standard methods for the examination of water and wastewater (19th edition), prepared and published jointly by American Public Health Association, American Water Works Association and Water Environment Association".

Said mixed liquor allows further treatment of the wastewater under specific conditions. Said specific conditions can be aerobic (i.e. dissolved oxygen is present), anoxic (i.e. dissolved oxygen is not present and dissolved nitrite or dissolved nitrate are present), anaerobic (i.e. dissolved oxygen, dissolved nitrite and dissolved nitrate are not present) conditions or intermediate conditions between aerobic, anoxic and anaerobic conditions. Said specific conditions can be discriminated in time or in space. In time, discrimination can occur by e.g. discontinuous aeration of said mixed liquor. In space, discrimination can occur by e.g. using different holding or reactor tanks for said mixed liquor. Discrimination in space can also occur on a microscopic level within the different layers of sludge flocs in said mixed liquor of activated sludge systems or in biofilms of biofilm processes. Said specific conditions can occur in typical process units used in biological treatment systems such as the selector, the anaerobic reactor or the oxidation ditch.

The biological treatment implies that a clarification step of the mixed liquor flowing out of the bioreactor system (bioreactor effluent) is required wherein the activated sludge is separated from the treated wastewater. The separated activated sludge is at least in part contained in a mixed liquor stream showing a higher MLSS concentration. In conventional activated sludge processes (CAS), said separation is done by using a settling tank wherein the separation occurs through gravity that forces the settling of the activated sludge flocs and other suspended components. Other possible separation processes are flotation or (membrane) filtration. The said separated activated sludge is returned to the biological process for mixing with wastewater and/or said separated activated sludge is in part not returned to the biological treatment but undergoes further treatment and disposal. Said not returned part is further referred to as the excess sludge. Further treatment of excess sludge can comprise e.g. sludge thickening by gravitation or a filter belt, sludge digestion, dewatering by a centrifuge, sludge drying, etc.

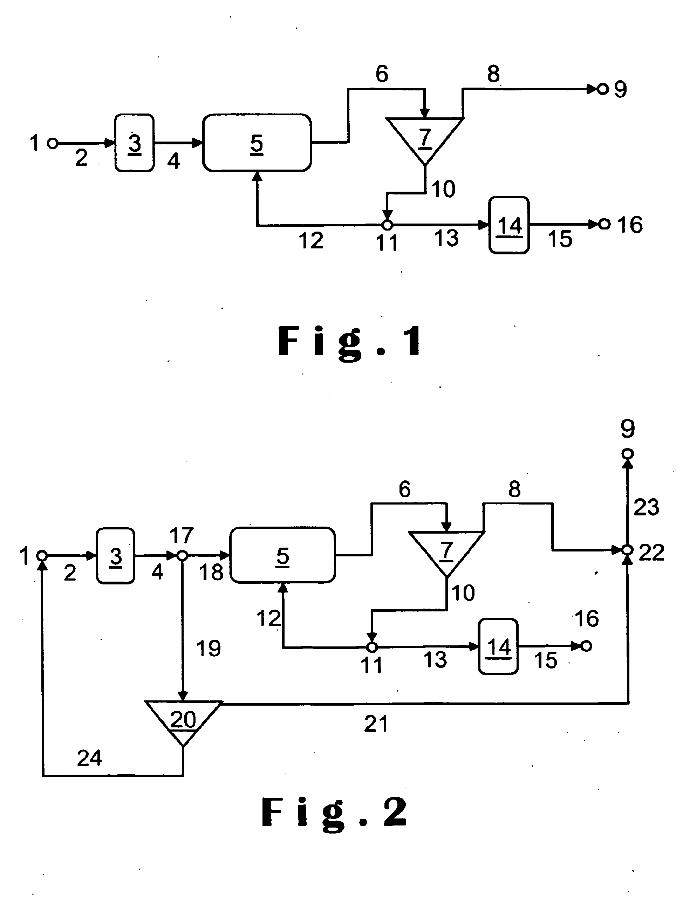

A typical prior art process configuration for wastewater treatment in presented in Figure 1. The wastewater is collected at the receiving point (1) from which it flows (2) to a mechanical treatment (3) and subsequently flows (4) to a bioreactor system (5) using activated sludge. After biological treatment, the mixed liquor (6) flows to a settling tank (7) in which the activated sludge is separated from the purified wastewater by settling of the activated sludge flocs and other suspended components. The purified wastewater removed (8) from the settling tank (7) flows (8) to the discharge point (9). The separated sludge removed (10) from the settling tank (7) is returned (12) to the bioreactor system (5) or in part removed (13) for sludge treatment (14) and disposal (16). A typical process configuration according to Figure 1 can also include several settling tanks in parallel operation.

When collecting a wastewater stream characterised by strong variations in flow rate it is in most cases not possible to treat at all time the complete flow in the bioreactor system. One reason for this is that the hydraulic capacity of the settling tank is limited. Too high flow rates to the settling tank will result in too high flow rates within the settling tank and a bad settling of the sludge flocs and other suspended components. The latter will result in the discharge of activated sludge with the treated wastewater. A typical example of a situation where strong variations in collected wastewater flow rate exist is the collection of municipal wastewater collected in a combined sewer system. A combined sewer system is a sewer system that collects e.g. as well household wastewater as run-off water from parkings, roofs, streets, .... The wastewater collected by a combined sewer system can thus collect a significant higher flow rate during rain weather conditions (i.e. the rain weather flow - RWF) in comparison with dry weather conditions (i.e. the dry weather flow - DWF).

A known solution to circumvent the problem of varying wastewater flow rates and to safeguard the performance of the settling tank in a CAS (Conventional Activated Sludge - cf. Figure 1) system by limiting its hydraulic loading is to split up the wastewater stream before the biological treatment and to give the separated stream an additional separate treatment without biological treatment. An example of this is given by the separate extension of the mechanical treatment for said separated wastewater stream not flowing to the biological treatment. A typical process configuration illustrating this principle is presented in Figure 2. After a mechanical treatment (3), the wastewater stream is split up (17). One part flows (18) to a bioreactor system (5), the other part flows (19) to a storm water tank (20). In said storm water tank (20), the wastewater undergoes an additional mechanical treatment by settling of suspended material. The wastewater removed (21) from the storm water tank (20) is mixed (22) with the wastewater removed (8) from the settling tank (7) and flows (23) to the discharge point (9). The settled material removed (24) from the storm water tank can be returned to the receiving point (1) of the collected wastewater.

A disadvantage of applying a separation of activated sludge and wastewater by means of gravitation in a settling tank is the fact that the performance of the separation process is largely depending on the physical properties of the sludge flocs, the mixed liquor suspended solids (MLSS) concentration, the configuration of the settling tank and the operation (e.g. the previously mentioned hydraulic loading) of the settling tank. A low performance of the separation process can result in a deterioration of the quality of the treated wastewater as it will contain still a significant amount of suspended matter.

Another disadvantage of applying a separation of activated sludge and wastewater by means of gravitation in a settling tank is the fact that, in practice due to economic reasons, the volume of settling tanks is limited such that the maximum allowable MLSS concentration to obtain a good separation is limited to the order of 4-5 g MLSS/I. This implies that the MLSS concentration of the mixed liquor in the biological treatment process is also limited to this range. The latter limits the treatment capacity of the biological process per unit reactor volume and results in rather high footprint requirements, i.e. the installation requires a quite large surface area.

A solution to circumvent the problem of the limitation of MLSS concentration of mixed liquor in the range of 4-5 g MLSS/I and the problem of the impact of the physical properties of the sludge floc on the activated sludge - wastewater separation process, is the use of membranes for separation of the activated sludge from the treated wastewater. Membrane bioreactors (MBRs) combine membrane processes with biological processes for the treatment of wastewater. Membranes when coupled to biological processes are most often used as a replacement for separation of activated sludge and purified wastewater by means of gravitation in a settling tank. In MBRs said separation is done by using membranes which separate the activated sludge from the treated wastewater by filtration. In wastewater treatment, the driving force for this process is usually a pressure gradient, although also other mechanisms can be used to force media through a membrane (e.g. a concentration gradient or an electrical potential difference). Said pressure gradient over the membrane can be applied by gravity (i.e. by the hydraulic head of the mixture above the membrane) or mechanically (i.e. by pumps).

Compared to the CAS process, applying MBRs for wastewater treatment offers two basic advantages. First of all MBRs generate a much better effluent quality, since by definition complete retention of suspended matter (e.g. activated sludge, bacteria) or components adsorbed to them is attainable. Secondly MBRs allow to build more compact, since they allow to work at a higher mixed liquor suspended solids (MLSS) concentration, typically in the range of 10-20 g MLSS/I.

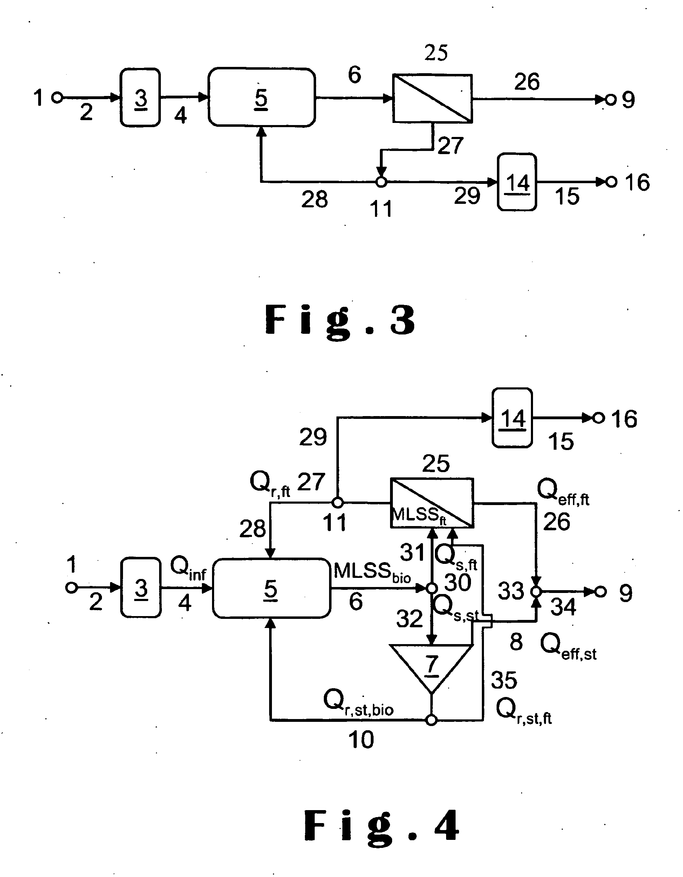

A typical prior art MBR configuration for wastewater treatment is presented in Figure 3. The wastewater is collected at the receiving point (1) from which it flows (2) to a mechanical treatment (3), mostly comprising a fine screen of minimum 3 mm, and subsequently flows (4) in series to a bioreactor system (5) using activated sludge. After biological treatment, the mixed liquor (6) flows to a membrane filtration tank (25) in which mixed liquor is separated by filtration into a filtrate (26), i.e. the purified wastewater, and a retentate (27), i.e. the mixed liquor stream retaining the activated sludge. The filtrate (26) flows to the discharge point (9). Activated sludge from the membrane filtration tank (25) is recycled (28) to the bioreactor system (5) or is in part removed (29) for sludge treatment (14) and disposal (16) (to avoid that the MLSS content in the bioreactor and/or in the membrane filtration tank would become too high).

A major disadvantage restricting a widespread application of MBRs for wastewater treatment is the fact that the membrane component cost is more or less proportional to plant size (i.e. total influent flow) as opposed to the clarifying component in a CAS system showing a downward economy of scale. In addition, the total membrane surface area in an MBR has to be designed based on the maximal flow to be treated biologically, where a higher flow variation results in more membrane surface area. As a result MBRs are rarely financially beneficial in case the wastewater flow is either very large or in case the flow rate is characterised by strong variations.

In practice, hybrid wastewater treatment systems have therefore been proposed to reduce the membrane component cost (see for example the MBR Special III issue of April 2005 of the "H₂0 Magazine for water supply and water management". These systems comprise a CAS tank (= first bioreactor or the bioreactor system), a settling tank arranged downstream the CAS tank and an MBR (comprising a second bioreactor belonging to the membrane filtration system and the actual membrane filtration tank). In the known parallel configuration the wastewater influent is split over the CAS tank and the MBR, during rain weather conditions a larger portion of the influent being fed to the CAS tank. In the known in-series-hybrid configuration, all the wastewater influent is fed to the CAS tank. During dry weather conditions, all of the CAS effluent is fed to the MBR whilst during rain weather conditions a portion of the CAS effluent is treated in the settling tank. The wastewater treatment is thus performed in accordance with a first mode, for a low influent flow rate, and in accordance with a second mode, for a higher influent flow rate, and depending on the magnitude of the influent flow rate there is switched between both modes.

A drawback of the known hybrid systems is that it is always necessary to build, control and maintain two biological treatment systems and that the treatment capacity per unit reactor volume of the biological process in the CAS tank is still limited.

An object of the present invention is therefore to provide a hybrid wastewater treatment system, comprising at least one membrane filtration system and at least one settling tank, wherein the treatment capacity of the bioreactor system is higher per unit reactor volume than in a CAS tank.

To this end the wastewater treatment is also performed in accordance with the above described first and second mode but, when switching from the first to the second mode, the mixed liquor suspended solids content (MLSS_{bio}) of the bioreactor effluent is adjusted by introducing more or less activated sludge in the bioreactor system so that in the first mode MLSS_{bio} is larger than in the second mode.

When performing the wastewater treatment in accordance with the first mode (i.e. when the influent flow rate Q_{inf} to the bioreactor system is relatively small, for example during dry weather conditions) the bioreactor volume is thus more effectively used for the biological conversion processes so that, on average, the treatment capacity of the bioreactor system is increased per unit reactor volume.

In a preferred embodiment, the process according to the invention is **characterised in that**, when switching from said first to said second mode, the sludge recycling factor over the membrane filtration system Q_{r,ft}/Q_{eff,ft} is decreased to raise MLSS_{ft} and to lower MLSS_{bio} and vice versa, when switching from said second to said first mode, the sludge recycling factor over the membrane filtration system Q_{r,ft}/Q_{eff,ft} is increased to lower MLSS_{ft} and to raise MLSS_{bio}.

This preferred embodiment enables to store at least a portion of the activated sludge, which has to be removed from the bioreactor system to lower MLSS_{bio}, in the membrane filtration system when Q_{inf} increases so that the process has to be switched to the second mode and to increase MLSS_{bio} more quickly again when Q_{inf} decreases so that the process has to be switched to the first mode.

In a further preferred embodiment, the process according to the invention is **characterised in that,** when switching from said second to said first mode, at least a portion of the activated sludge which has been accumulated in the settling tank is recycled to the bioreactor system to raise MLSS_{bio}. Activated sludge can be accumulated in the settling tank in particular when switching from said first to said second mode and/or when performing the wastewater treatment in said second mode.

This preferred embodiment therefore also allows to increase MLSS_{bio} more quickly again when Q_{inf} decreases so that the process has to be switched to the first mode.

Preferably, when switching from said second to said first mode, the volume of further mixed liquor contained in the settling tank (7) is lowered, preferably until the settling tank (7) is substantially empty and, when changing from said first to said second mode, the settling tank (7) is filled again with bioreactor effluent. In this way, the capacity of the settling tank to store activated sludge from the bioreactor system and to supply it again to the bioreactor system is optimally used.

More preferably, when filling the settling tank at least a portion of the activated sludge contained therein is recycled to the membrane filtration system, the supply of bioreactor effluent to the membrane filtration system being preferably interrupted when receding the activated sludge from the settling tank to the membrane filtration system. In this way, a better clarification will be achieved in the settling tank when it is filled and MLSS_{ft} will increase more effectively, especially when, at least during an initial phase of filling the settling tank, no mixed liquor is recycled from the membrane filtration system to the bioreactor system.

Other particularities and advantages of the invention will become apparent from the following description of some particular embodiments of the process and the installation according to the present invention. The reference numerals used in this description relate to the annexed drawings wherein:
Figure 1 illustrates schematically a prior art conventional activated sludge (CAS) wastewater treatment system;
Figure 2 illustrates schematically a same CAS treatment system as illustrated in Figure 1 but supplemented with a storm weather tank;
Figure 3 illustrates schematically a prior art membrane bioreactor (MBR) wastewater treatment system; .
Figure 4 illustrates schematically a hybrid wastewater treatment system according to the present invention;
Figure 5 shows a graph of the evolution of the MLLS values in the bioreactor system and in the membrane filtration system when switching from the first mode (DWF) to the second mode (RWF) and also shows a graph of the filling of the settling tank during this switching; and
Figure 6 shows a graph similar to the graph of Figure 5 but illustrating the MLLS values and the draining of the settling tank when switching from the second (RWF) to the first mode (DWF).

A preferred embodiment of the present invention is presented in Figure 4. The wastewater is collected at a receiving point 1 from which it is continuously delivered through a duct 2 to a mechanical treatment system 3 (mostly comprising a fine screen of minimum 3 mm). The mechanically treated wastewater subsequently flows at a (variable) flow rate Q_{inf}, through a duct 4, to a bioreactor system 5 wherein the wastewater is mixed with activated sludge to produce a mixed liquor. After the biological treatment in the bioreactor system 5, the mixed liquor stream leaving the bioreactor system is split up, at least under rain weather conditions, at 30 into two portions (i.e. two flows): one portion which is supplied both under dry and under rain weather conditions at a flow rate Q_{s,ft}, through a duct 31, to a membrane filtration system 25 comprising at least one membrane filtration tank, and a more variable portion, caused by rain weather conditions, which flows at a flow rate Q_{s,st} through a duct 32 to a settling tank system 7 which comprises at least one settling tank. In the settling tank 7 a further mixed liquor containing the settled activated sludge is separated from the wastewater by gravitation. When the settling tank is full, the separated sludge removed from the settling tank 7 is returned at a flow rate Q_{r,st,bio}, through a duct 10, to the bioreactor system 5. In the membrane filtration system 25 the activated sludge, more particularly a mixed liquor retentate containing the activated sludge, is separated from the wastewater by filtration. The separated wastewater, which is removed at a flow rate Q_{eff,ft}, through a duct 26, from the membrane filtration tank 25, is mixed at 33 with the wastewater which is removed at a flow rate Q_{eff,st}, through a duct 8, from the settling tank 7 (at least when the settling tank is filled and Q_{s,st} is larger than Q_{r,st,bio} or larger than the sum of O_{r,st,bio} and Q_{r,st,ft} when some of the mixed liquor would also be recycled from the settling tank to the membrane filtration tank). Said mixture flows through a duct 34 to a discharge point 9. Mixed liquor retentate from the membrane filtration system 25 is recycled at a flow rate Q_{r,ft}, through a duct 27, to the bioreactor system 5 or is in part removed (excess sludge) through a duct 29 for sludge treatment at 14 and disposal at 16.

The installation illustrated in Figure 4 is especially suited to enable to empty the settling tank 7 during dry weather conditions and to fill it again during rain weather conditions. To enhance the storage of activated sludge in the filtration tank, and to achieve, once filled, immediately a better clarification in the settling tank 7, an additional duct 35 is provided which enables to recycle activated sludge from the settling tank, at a flow rate Q_{r,st,ft}, to the membrane filtration system 25, and this during the initial phase that the settling tank is being filled. For the same reason, the recycling of mixed liquor retentate from the membrane filtration tank to the bioreactor system is interrupted during the initial phase of filling the settling tank. As a consequence, the flow rate of the purified wastewater produced by the filtration tank, Q_{eff,ft}, equals to flow rate of the recycle stream from the settling tank, O_{r,st,ft} (if Q_{s,ft} = 0).

The preferred installation has only been illustrated schematically in Figure 4. More particularly the structure or composition of each of the components of the installation has not been represented since they are known per se. The bioreactor system 5 comprises for example a bioreactor which consists of several compartments through which the mixed liquor is led. Although the presence of only one bioreactor is preferred in view of reducing the installation and operational costs, the bioreactor system 5 may comprise two or even more bioreactors. After the flow of bioreactor effluent is split at 30, the membrane filtration system 25 and the settling tank system 7 begin.

The membrane filtration system 25 may comprise only one membrane filtration tank or more membrane filtration tanks, which are preferably arranged in parallel. The membrane filtration system 25 may also comprise an additional bioreactor (MBR) but such an additional bioreactor is again not preferred so that the membrane filtration system 25 preferably contains no additional bioreactor. In this respect it should be noted that, although membrane filtration tanks are aerated with course air bubbles to clean the membranes, such membrane filtration tanks are not to be considered as bioreactors.

The settling tank system 7 may comprise only one settling tank or more settling tanks, which are preferably arranged in parallel. Although it is possible to provide an additional bioreactor in the settling tank system 7, this is again not preferred.

In the process according to the invention, the wastewater is fed at a flow rate Q_{inf} to the bioreactor system. This wastewater may be industrial wastewater but will usually be municipal wastewater. The installation is preferably constructed to be able to treat Q_{inf} flow rates varying for example between a very small flow rate (below 1014, i.e. the dry weather flow, not including parasitic water such as e.g. infiltration water into the sewer system, multiplied by 1 and 24/14) and 6Q14.

The wastewater is led in the form of a mixed liquor, which contains activated sludge recycled from the membrane filtration system 25 and/or from the settling tank system 7, through the bioreactor system 5. Due to the addition of activated sludge to the wastewater and the generation of additional activated sludge flocs in the bioreactor system, the mixed liquor has in the last compartment of the bioreactor system 5, i.e. in the bioreactor effluent which is split over both separation systems, a predetermined mixed liquor suspended solids content MLSS_{bio}.

The portion of the bioreactor effluent supplied to the membrane filtration system 25 is filtrated to produce the purified wastewater stream at the flow rate Q_{eff,ft} and an activated sludge fraction which is intended to be recycled (Q_{r,ft}) to the bioreactor system 5 and which has an MLSS content MLSS_{ft}, which is normally larger than MLSS_{bio}.

An essential feature of the process according to the invention is that the wastewater treatment is performed in accordance with two modes, namely in accordance with a first mode for a flow rate Q_{inf} which is within a first range, and in accordance with a second mode, for a flow rate Q_{inf} which is within a higher, second range (which may overlap with the first range) and that there is switched between both modes depending on the magnitude of Q_{inf}. Switching between the two modes can be done based on a direct or indirect measurement of Q_{inf}, for example by measuring the average magnitude of Q_{inf} during a predetermined period of time (for example greater than one hour), by measuring the water level in a tank wherein the water level fluctuates in depending on Q_{inf} or by measuring for example an indirect parameter such as the ammonium content of the fed wastewater (diluted under rain weather conditions).

A further essential feature of the process according to the invention is that when switching between the two operational modes, MLSS_{bio} is adjusted so that in the first mode MLSS_{bio} is larger than in the second mode. In the first mode, the bioreactor effluent is entirely or at least mainly supplied to the membrane filtration system so that the purified wastewater can be effectively separated from the activated sludge notwithstanding the high MLSS content of the bioreactor effluent. In this mode, the bioreactor system 5 has a higher treatment capacity per volume unit than in the prior art hybrid configurations. In the second mode, MLSS_{bio} is then again lowered since a large portion of the bioreactor effluent has to be clarified in the settling tank system 7.

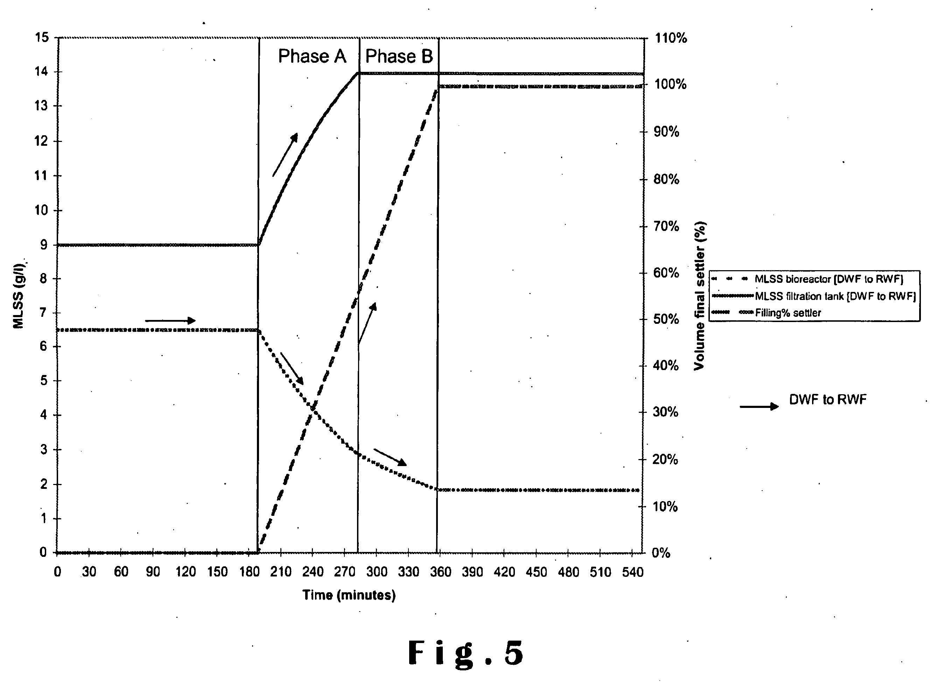

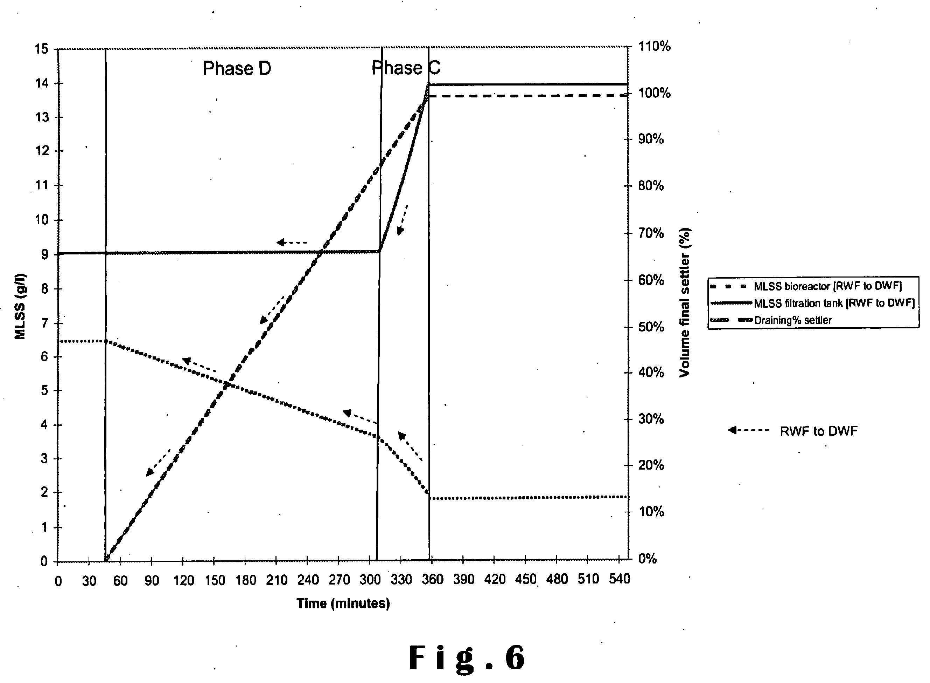

The operation of the process in the first and in the second mode and the transitions between these two modes will now be explained more into detail. Reference is made to the graphs shown in Figures 5 and 6. When relationships between different flow rates are given, it should be noted that these relationships are only average relationships and do not take into account any fluctuations of the liquid levels in the different tanks or compartments or any time delays.

Two different situations are described, namely first a preferred embodiment wherein the settling tank is filled and emptied during the transition between the two operational modes and a less preferred embodiment wherein the settling tank remains full.

### SETTLING TANK EMPTIED - FILLED

### 1. First mode (DWF)

When the process is operated in the first mode, Q_{inf} is within a first predetermined range. In this mode the settling tank 7 is empty and there is thus no settling tank effluent (Q_{eff,st} = 0) and also no recycling of activated sludge from the settling tank (Q_{r,st,bio} = 0 and Q_{r,st,ft} = 0). All of the effluent will be produced by the membrane filtration system so that Q_{eff,ft} = Q_{inf} (on average as mentioned hereabove). The first predetermined range of Q_{inf} is thus determined by the maximum capacity of the membrane filtration system Q_{eff,ft,max}, this range being preferably from 0 to 0.5 x Q_{eff,ft,max}, more preferably from 0 to 0.7 x Q_{eff,ft,max}, and most preferably from 0 to 0.9 x Q_{eff,ft,max}.

A certain amount of the mixed liquor retentate produced in the membrane filtration system 25 is recycled at the flow rate Q_{r,ft} to the bioreactor system. MLSS_{bio} is maintained at a relatively high level of for example 6.5 g/l as illustrated in Figures 5 and 6. In general, MLSS_{bio} is controlled so that in the first mode MLSS_{bio} is (on average) at least 20%, preferably at least 30% and more preferably at least 40% larger than a reference value. This reference value is for example the average of MLSS_{bio} during the first mode and of MLSS_{bio} during the second mode, and is preferably larger than 2 g/l, more preferably larger than 3 g/l, but smaller than 10 g/l, preferably smaller than 8 g/l. The average value of MLSS_{bio} is further preferably smaller in the first mode than 12 g/l, and more preferably smaller than 10 g/l.

Q_{r,ft} is controlled so that MLSS_{ft} is kept below a predetermined maximum MLSS value for the membrane filtration system (for example smaller than 20 g/l). MLSS_{ft} is preferably only somewhat higher than MLSS_{bio} and is, more preferably lower than MLSS_{ft} maintained, as explained hereinafter, in the membrane filtration system in the second mode. MLSS_{ft} can be increased by decreasing the sludge recycling factor R over the membrane filtration system (R = Q_{r,ft}/Q_{eff,ft}) and can be decreased by increasing the sludge recycling factor. At the same time, MLSS_{bio} is decreased and respectively increased but usually to a lesser extent (the bioreactor system has usually a larger volume than the membrane filtration system). In case MLSS_{bio} would become too high, it can be reduced by removing excess sludge (mixed liquor retentate) via duct 29 out of the installation. Although this could also be automated, removing excess sludge will usually be done in practice by an operator who periodically will control MLSS_{bio} of the bioreactor system. In the example illustrated in Figures 5 and 6, MLSS_{ft} is maintained on average at about 9 g/l. Due to the relatively small difference between MLSS_{bio} and MLSS_{ft} the sludge recycling factor R will generally be quite large in the first mode, and will normally be larger than 1.5, more particularly even larger than 2.

### 2. Second mode (RWF)

When the process is operated in the second mode, Q_{inf} is within a second predetermined range. The second range is higher than the first range but may overlap with the first range. In this mode the settling tank 7 has been filled and the bioreactor effluent is both supplied to the membrane filtration system 25 and to the settling tank system 7 so that there is an effluent from the membrane filtration system (Q_{eff,ft} > 0) and an effluent from the setting tank system (Q_{eff,st} > 0). Since the effluent from the membrane filtration system is of a higher purity than the effluent of the settling tank system, Q_{eff,ft} is preferably higher than 0.5 x Q_{eff,ft,max}, more preferably higher than 0.7 x Q_{eff,ft,max}, and most preferably higher than 0.9 x Q_{eff,ft,max}. Q_{eff,st} is thus equal to Q_{inf} - Q_{eff,ft} (on average as mentioned hereabove).

In the second mode, activated sludge is not only recycled from the membrane filtration system to the bioreactor system (Q_{r,ft} > 0) but also from the settling tank system to the bioreactor system (Q_{r,st,bio} > 0). MLSS_{bio} is however maintained at a relatively low level of for example 2 g/l as illustrated in Figures 5 and 6. In this way, the bioreactor effluent can also be effectively clarified in the settling tank system 7. In general, MLSS_{bio} is controlled so that in the second mode MLSS_{bio} is (on average) at least 20%, preferably at least 30% and more preferably at least 40% smaller than the above-mentioned reference value. The average value of MLSS_{bio} in the second mode is further preferably higher than 1 g/l.

Q_{r,ft} is controlled so that MLSS_{ft} is kept below a predetermined maximum MLSS value for the membrane filtration system (for example smaller than 20 g/l). MLSS_{ft} is higher than MLSS_{bio} and is more preferably higher than MLSS_{ft} maintained, as explained hereabove, in the membrane filtration system in the first mode. Also in the second mode MLSS_{ft} can be increased by decreasing the sludge recycling factor R over the membrane filtration system (R = Q_{r,ft}/Q_{eff,ft}) and can be decreased by increasing the sludge recycling factor. At the same time, MLSS_{bio} is decreased and respectively increased. In the second mode, MLSS_{bio} can also be increased and decreased by recycling more or less activated sludge from the settling tank system 7 to the bioreactor system. In case MLSS_{bio} would become too high, it can be reduced by removing excess sludge out of the installation, preferably via duct 29. Although this could also be automated, removing excess sludge will usually be done in practice by an operator who periodically will control MLSS_{bio} of the bioreactor system. In the example illustrated in Figures 5 and 6, MLSS_{ft} is maintained on average at about 14 g/l. Due to the relatively big difference between MLSS_{bio} and MLSS_{ft} the sludge recycling factor R will generally be quite small in the second mode, and will normally be smaller than 1.5, more particularly even smaller than 1.

### 3. Transition phase A (transition from mode 1 to mode 2: DWF to RWF)

When operating the installation in mode 1, and when Q_{inf} raises above said first predetermined range, i.e. when not all of the influent can be treated over the membrane filtration system 25, there has to be switched from the first to the second mode. In the first mode the settling tank was empty. During the transition phase A the settling tank 7 is filled with bioreactor effluent (Q_{s,st} > 0). The settling tank could be filled with the excess of bioreactor effluent which can not be treated in the membrane filtration system 25. However, all of (or preferably at least halve of) the bioreactor effluent is preferably supplied during this phase to the settling tank system (Q_{s,st} = Q_{inf} or Q_{s,st} is preferably larger than 0.5 x Q_{inf}). At least a portion of the activated sludge contained in the settling tank is supplied during this filling step to the membrane filtration system so that Q_{eff,ft} is still preferably higher than 0.5 x Q_{eff,ft,max}, more preferably higher than 0.7 x Q_{eff,ft,max}, and most preferably higher than 0.9 x Q_{eff,ft,max}. In this way, the produced effluent is still of the same high purity and, when filled, the effluent from the settling tank will also be immediately of a better quality.

Another advantage is that by recycling activated sludge to the membrane filtration system 25, it is possible to achieve a quick accumulation of activated sludge flocs in the membrane filtration system. When switching from the first to the second mode, MLSS_{ft} is indeed preferably increased to store activated sludge flocs in the membrane filtration system which can later on, when switching back to the first mode, be used to achieve a faster increase of MLSS_{bio}.

To accumulate activated sludge in the membrane filtration system (raise MLSS_{ft}), and to decrease MLSS_{bio}, the sludge recycling factor over the membrane filtration system R is preferably decreased. More preferably, recycling of activated sludge from the membrane filtration system to the bioreactor system is stopped (Q_{r,ft} = 0 and R = 0) so that the fastest decrease of MLSS_{bio} and the fastest increase of MLSS_{ft} can be achieved. During the transitional phase A, MLSS_{ft} is preferably raised with at least 10%, more preferably with at least 20% and most preferably with at least 30%.

### 3. Transition phase B (transition from mode 1 to mode 2: DWF to RWF)

When the desired increased MLSS_{ft} level of for example 14 g/l is achieved in the membrane filtration system, recycling of activated sludge from the settling tank to the membrane filtration system is stopped (Q_{r,st,ft} = 0) so that activated sludge can accumulate in the settling tank during the further filling thereof. During phase B, the water treatment process is performed further substantially in the same way as described hereabove for the second mode. The only further differences are that no effluent is produced by the settling tank system (Q_{eff,st} = 0) and that there preferably also no recycling of activated sludge from the settling tank system to the bioreactor system (Q_{r,st,bio} = 0). MLLS_{bio} should indeed be further decreased to achieve the lower MLLS_{bio} value for the second mode.

### 4. Transition phase C (transition from mode 2 to mode 1: RWF to DWF)

When operating the installation in mode 2, and when Q_{inf} reduces below said second predetermined range, i.e. when it is no longer required to treat a portion of the bioreactor effluent over the settling tank system, there has to be switched from the second to the first mode. In the second mode the settling tank was full. During the transition phase C the supply of bioreactor effluent to the settling tank system is stopped (Q_{s,st} = 0) and the settling tank 7 is emptied. During the transition from the first mode to the second mode and/or when performing the wastewater treatment in the second mode, activated sludge was allowed to accumulate in the settling tank system. At least a portion of this accumulated active sludge (preferably the entire content of the setting tank system) is now recycled to the bioreactor system to raise MLSS_{bio} (Q_{r,st,bio} > 0).

Just as in the first mode, all of the effluent will be produced by the membrane filtration system so that Q_{eff,ft} = Q_{inf}. (on average as mentioned hereabove). To further raise MLSS_{bio}, MLSS_{ft} is preferably lowered by increasing the sludge recycling factor over the membrane filtration system R to the bioreactor system. During the transition phase C, MLSS_{ft} is preferably lowered with at least 10%, more preferably with at least 20% and most preferably with at least 30%.

### 4. Transition phase D (transition from mode 2 to mode 1: RWF to DWF)

When the desired reduced MLSS_{ft} level of for example 9 g/l is achieved in the membrane filtration system, the water treatment process is performed substantially in the same way as described hereabove for the first mode. The only difference is that the settling tank is further emptied in the bioreactor system to increase MLSS_{bio}. When the settling tank is empty or nearly empty, it can be rinsed out, for example with some bioreactor effluent or even with some purified wastewater.

### SETTLING TANK KEPT FILLED

### 1. First mode (DWF)

In this mode a small amount of bioreactor effluent is continuously or discontinuously recycled over the settling tank system back to the bioreactor system to constantly refresh the activated sludge (mixed liquor) contained therein. When no effluent is removed from the settling tank system (Q_{eff,st} = 0) the process in the first mode is further entirely identical to the process as described hereabove for the situation wherein the settling tank is emptied. It is however now possible to remove a portion of the bioreactor effluent as treated wastewater via the settling tank system (Q_{eff,st} > 0). In that case Q_{eff,ft} is preferably larger than 80% of Q_{inf} or, in other words, Q_{eff,st} is preferably smaller than 20% of Q_{inf}.

### 2. Second mode (RWF)

The process is in this second mode identical to the process as described hereabove for the situation wherein the settling tank is emptied when switching from the second to the first mode.

### 3. Transition phase A (transition from mode 1 to mode 2: DWF to RWF)

During this transition phase MLSS_{ft} is also raised by reducing the recycling factor over the membrane filtration system. Instead of feeding the membrane filtration system only with activated sludge settled in the settling tank, a portion of the bioreactor effluent is preferably also fed to the membrane filtration system to prevent immediate overloading of the settling tank. Activated sludge is thus also allowed to accumulate in the membrane filtration system. The process can further be controlled in the same way as in the second mode.

### 3. Transition phase B (transition from mode 1 to mode 2: DWF to RWF)

When the desired increased MLSS_{ft} level of for example 14 g/l is achieved in the membrane filtration system, phase A is terminated and the water treatment process can be performed substantially in the same way as described hereabove for the second mode. The only difference is that a smaller amount of activated sludge accumulated in the settling tank can further be recycled to the bioreactor system to further lower MLSS_{bio} if MLSS_{bio} would still be too high (for mode 2).

### 4. Transition phase C (transition from mode 2 to mode 1: RWF to DWF)

During this transition phase MLSS_{ft} is also lowered by increasing the recycling factor over the membrane filtration system to increase MLSS_{bio}. MLSS_{bio} can further be increased by recycling more activated sludge from the settling tank system to the bioreactor system. The process can further be controlled in the same way as in the first mode.

### 4. Transition phase D (transition from mode 2 to mode 1: RWF to DWF)

When the desired reduced MLSS_{ft} level of for example 9 g/l is achieved in the membrane filtration system, the water treatment process is performed substantially in the same way as described hereabove for the first mode. The only difference is that a larger amount of activated sludge accumulated in the settling tank can further be recycled to the bioreactor system to further raise MLSS_{bio}.

In the above described embodiments, the membrane filtration system and the settling tank system are both used to store activated sludge flocs when MLSS_{bio} is to be lowered when switching from the first mode to the second mode and are also used to supply activated sludge flocs again to the bioreactor system when MLSS_{bio} is to be raised again when switching from the second mode to the first mode. In order to enable to store or accumulate a substantial amount of activated sludge flocs, the membrane filtration system preferably comprises a volume of mixed liquor retentate which is larger than which is larger than 10%, preferably larger than 15%, more preferably larger than 20%, of the volume of the mixed liquor contained in said bioreactor system. The settling tank system, on the other hand, has preferably a volume which is larger than 10%, preferably larger than 20%, and more preferably larger than 30% of the volume of mixed liquor contained in said bioreactor system.

### EXAMPLE

The data indicated in Figures 5 and 6 are based on the following parameters:
- One bioreactor having a volume of 1230 m³
- One membrane filtration tank having a volume of 440 m³
- One settling tank having a volume of 1200 m³
- Maximum total influent flow rate (Q_{inf,max}) is 179 I/s
- Maximum effluent flow rate of the membrane filtration tank (Q_{eff,ft,max}) is 60 I/s
- Maximum effluent flow rate of the settling tank (Q_{eff,st,max}) is 119 l/s

As to the installation used to perform the process according to the invention, it should be noted that the necessary pumps should be provided to circulate the wastewater through the different components and that an automatic control system is provided to perform the process in the different modes and to switch between these modes. MLSS_{ft} will normally also be controlled automatically, usually based on Q_{eff,ft}. If the suspended solids content in the installation becomes too high, especially if MLSS_{bio} becomes too high, this will normally be controlled by an operator who will verify whether, depending on whether the installation is in the first or in the second mode, excess sludge has to be removed. This will be done periodically, for example once a day or once a week.

## Claims

1. A process for treating wastewater comprising the steps of:
- feeding the wastewater at a flow rate Q_{inf} to a bioreactor system (5);
- leading the wastewater in the form of a mixed liquor containing activated sludge through the bioreactor system (5), the mixed liquor leaving said bioreactor system (5) as a bioreactor effluent which has a mixed liquor suspended solids content MLSS_{bio};
- performing the wastewater treatment in accordance with a first mode, for a flow rate Q_{inf} which is within a first range, and in accordance with a second mode, for a flow rate Q_{inf} which is within a higher, second range and switching between both modes depending on the magnitude Of Q_{inf};
- supplying both in said first and in said second mode at least a portion of the bioreactor effluent to a membrane filtration system (25) wherein said portion of the bioreactor effluent is filtrated to produce a purified waste water stream at a flow rate Q_{eff,ft} and a mixed liquor retentate which has a mixed liquor suspended solids content MLSS_{ft};
- recycling both in said first and in said second mode at least a portion of said mixed liquor retentate at a flow rate Q_{r,ft} to said bioreactor system (5); and
- supplying at least in said second mode a further portion of the bioreactor effluent to a settling tank system (7) which comprises at least one settling tank wherein said further portion of the bioreactor effluent is clarified to produce a further purified waste water stream and a further mixed liquor containing settled activated sludge, at least a portion of the further mixed liquor being recycled at a flow rate Q_{r,st,bio} to said bioreactor system (5);
**characterised in that,**
when switching from said first to said second mode and vice versa, MLSS_{bio} is adjusted so that in said first mode MLSS_{bio} is larger than in said second mode.

2. A process according to claim 1, **characterised in that,** when switching from said first to said second mode, the sludge recycling factor over the membrane filtration system Q_{r,ft}/Q_{eff,ft} is decreased to raise MLSS_{ft} and to lower MLSS_{bio} and vice versa, when switching from said second to said first mode, the sludge recycling factor over the membrane filtration system Q_{r,ft}/Q_{eff,ft} is increased to lower MLSS_{ft} and to raise MLSS_{bio}.

3. A process according to claim 2, **characterised in that** when switching from said first to said second mode MLSS_{ft} is raised with at least 10%, preferably with at least 20% and more preferably with at least 30%.

4. A process according to claim 2 or 3, **characterised in that** when switching from said second to said first mode MLSS_{ft} is lowered with at least 10%, preferably with at least 20% and more preferably with at least 30%.

5. A process according to any one of the claims 1 to 4, **characterised in that** the membrane filtration system (25) contains a volume of said mixed liquor retentate which is larger than 10%, preferably larger than 15%, more preferably larger than 20%, of the volume of mixed liquor contained in said bioreactor system (5).

6. A process according to any one of the claims 1 to 5, **characterised in that** MLSS_{bio} is adjusted so that in said first mode MLSS_{bio} is at least 20%, preferably at least 30% and more preferably at least 40% larger than a reference value and so that in said second mode MLSS_{bio} is at least 20%, preferably at least 30% and more preferably at least 40% smaller than said reference value.

7. A process according to claim 6, **characterised in that** said reference value is larger than 2 g/l, preferably larger than 3 g/l, but smaller than 10 g/l, preferably smaller than 8 g/l.

8. A process according to any one of the claims 1 to 7, **characterised in that**, when switching from said second to said first mode, at least a portion of the activated sludge, which has been accumulated in the settling tank (7), is recycled to the bioreactor system (5) to raise MLSS_{bio}.

9. A process according to claim 8, **characterised in that,** when switching from said second to said first mode, the volume of further mixed liquor contained in the settling tank (7) is lowered, preferably until the settling tank (7) is substantially empty and, when changing from said first to said second mode, the settling tank (7) is filled again with bioreactor effluent.

10. A process according to claim 9, **characterised in that** when filling the settling tank (7) at least a portion of the activated sludge contained therein is recycled to the membrane filtration system (25), the supply of bioreactor effluent to the membrane filtration system (25) being preferably interrupted when recycling the activated sludge from the settling tank (7) to the membrane filtration system (25).

11. A process according to any one of the claims 8 to 10, **characterised in that** the settling tank (7) has a volume which is larger than 10%, preferably larger than 20%, and more preferably larger than 30% of the volume of mixed liquor contained in said bioreactor system (5).

12. A process according to any one of the claims 1 to 11, **characterised in that,** when switching from said first to said second mode, recycling of the mixed liquor retentate produced in the membrane filtration system (25) to the bioreactor system (5) is substantially interrupted.

13. A process according to any one of the claims 1 to 12, **characterised in that** the membrane filtration system comprises at least one membrane filtration tank (25) but no additional bioreactor wherein biological conversion processes are carried out so that additional activated sludge is produced and the settling tank system (7) preferably also does not comprise an additional bioreactor wherein biological conversion processes are carried out so that additional activated sludge flocs are produced, the effluent supplied to the membrane filtration tank (25) and the effluent supplied to the settling tank (7) having preferably substantially the same MLSS content.

14. A wastewater treatment installation, comprising:
- at least one bioreactor system (5);
- means (4) for feeding the wastewater at a flow rate Q_{inf} to said bioreactor system (5) and for leading the wastewater in the form of a mixed liquor containing activated sludge through the bioreactor system (5) to produce a bioreactor effluent;
- means for switching between two modes wherein the wastewater treatment can be performed, namely between a first mode, wherein the wastewater treatment is performed for a flow rate Q_{inf} which is within a first range, and a second mode, wherein the wastewater treatment is performed for a flow rate Q_{inf} which is within a higher, second range;
- at least one membrane filtration system (25) arranged to filtrate bioreactor effluent to produce a purified waste water stream and a mixed liquor retentate;
- means (6, 31) for supplying at least a portion of the bioreactor effluent to said membrane filtration system (25);
- means (27) for recycling at least a portion of said mixed liquor retentate produced in the membrane filtration system (25) to said bioreactor system (5);
- at least one settling tank (7) arranged to clarify bioreactor effluent to produce a further purified waste water stream and a further mixed liquor containing settled activated sludge;
- means (6, 32) for supplying a further portion of the bioreactor effluent to said settling tank (7);
- means (10) for recycling at least a portion of said further mixed liquor to said bioreactor system (5),
**characterised in that**
the installation further comprises means for operating the installation in accordance with the process according to any one of the claims 1 to 13.

15. An installation according to claim 14, **characterised in that** it comprises means (6, 32) for filling the settling tank (7) with bioreactor effluent and for emptying (10) the settling tank (7) into the bioreactor system (5), the installation preferably further comprising means (35) for recycling a portion of the activated sludge contained in the settling tank (7) to the membrane filtration system (25).

## Patentansprüche

1. Ein Verfahren zur Abwasseraufbereitung, das die folgenden Schritte umfasst:
- Zuleitung des Abwassers bei einer Fließgeschwindigkeit Q_{inf} zu einem Bioreaktorsystem (5);
- Leitung des Abwassers in Form einer Mischflüssigkeit mit belebtem Schlamm durch das Bioreaktorsystem (5), wobei die Mischflüssigkeit das erwähnte Bioreaktorsystem (5) als Bioreaktorabfluss verlässt, der eine Schlammkonzentration im belebten Schlamm MLSS_{bio} hat;
- Durchführung der Abwasseraufbereitung gemäß einer ersten Art, für eine Fließgeschwindigkeit Q_{inf}, welche sich innerhalb eines ersten Bereichs befindet, und gemäß einer zweiten Art, für eine Fließgeschwindigkeit Q_{inf}, welche sich innerhalb eines höheren, zweiten Bereichs befindet, und Umschalten zwischen beiden Arten je nach der Größe von Q_{inf};
- Zuführung sowohl in der erwähnten ersten als in der erwähnten zweiten Art von zumindest einem Anteil des Bioreaktorabflusses zu einem Membranfiltersystem (25), in dem der erwähnte Anteil des Bioreaktorabflusses gefiltert wird, um einen gereinigten Abwasserstrom bei einer Fließgeschwindigkeit Q_{eff,ft} und ein Mischflüssigkeitsretentat herzustellen, welches eine Schlammkonzentration im belebten Schlamm MLSS_{ft} hat;
- Rückführung sowohl in der ersten als auch in der zweiten Art von zumindest einem Anteil des erwähnten Mischflüssigkeitsretentats bei einer Fließgeschwindigkeit Q_{r,ft} zum erwähnten Bioreaktorsystem (5); und
- Zuführung zumindest in der erwähnten zweiten Art eines weiteren Anteils des Bioreaktorabflusses zu einem Absetztanksystem (7), welches zumindest einen Absetztank umfasst, in dem der erwähnte weitere Anteil des Bioreaktorabflusses geklärt wird, um einen weiteren gereinigten Abwasserstrom und eine weitere Mischflüssigkeit mit abgesetztem belebtem Schlamm herzustellen, wobei zumindest ein Anteil der weiteren Mischflüssigkeit bei einer Fließgeschwindigkeit Q_{r,st,bio} zum erwähnten Bioreaktorsystem (5) zurückgeführt wird;
**dadurch gekennzeichnet, dass**
MLSS_{bio} beim Umschalten von der erwähnten ersten auf die erwähnte zweite Art und umgekehrt so angepasst wird, dass MLSS_{bio} in der erwähnten ersten Art größer als in der erwähnten zweiten Art ist.

2. Ein Verfahren nach Anspruch 1, **dadurch gekennzeichnet, dass** der Schlammrückführungsfaktor über das Membranfiltersystem Q_{r,ft}/Q_{eff,ft} beim Umschalten von der erwähnten ersten auf die erwähnte zweite Art gesenkt wird, um MLSS_{ft} anzuheben und um MLSS_{bio} zu senken und umgekehrt, dass der Schlammrückführungsfaktor über das Membranfiltersystem Q_{r,ft}/Q_{eff,ft} beim Umschalten von der erwähnten zweiten auf die erwähnte erste Art erhöht wird, um MLSS_{ft} zu senken und um MLSS_{bio} anzuheben.

3. Ein Verfahren nach Anspruch 2, **dadurch gekennzeichnet, dass** MLSS_{ft} beim Umschalten von der erwähnten ersten auf die erwähnte zweite Art um mindestens 10 %, vorzugsweise um mindestens 20 % und besser um mindestens 30 % angehoben wird.

4. Ein Verfahren nach Anspruch 2 oder 3, **dadurch gekennzeichnet, dass** MLSS_{ft} beim Umschalten von der erwähnten zweiten auf die erwähnte erste Art um mindestens 10 %, vorzugsweise um mindestens 20 % und besser um mindestens 30 % gesenkt wird.

5. Ein Verfahren nach jedem der Ansprüche 1 bis 4, **dadurch gekennzeichnet, dass** das Membranfiltersystem (25) eine Menge des erwähnten Mischflüssigkeitsretentats enthält, die größer als 10 %, vorzugsweise größer als 15 %, besser größer als 20 % der Menge der im erwähnten Bioreaktorsystem (5) enthaltenen Mischflüssigkeit ist.

6. Ein Verfahren nach jedem der Ansprüche 1 bis 5, **dadurch gekennzeichnet, dass** MLSS_{bio} so angepasst wird, dass MLSS_{bio} in der erwähnten ersten Art mindestens 20 %, vorzugsweise mindestens 30 % und besser mindestens 40 % größer als ein Bezugswert ist und dass MLSS_{bio} in der erwähnten zweiten Art mindestens 20 %, vorzugsweise mindestens 30 % und besser mindestens 40 % kleiner als der erwähnte Bezugswert ist.

7. Ein Verfahren nach Anspruch 6, **dadurch gekennzeichnet, dass** der erwähnte Bezugswert größer ist als 2 g/l, vorzugsweise größer als 3 g/l, aber kleiner ist als 10 g/l, vorzugsweise kleiner als 8 g/l.

8. Ein Verfahren nach jedem der Ansprüche 1 bis 7, **dadurch gekennzeichnet, dass,** beim Umschalten von der erwähnten zweiten auf die erwähnte erste Art, zumindest ein Anteil des belebten Schlamms, der im Absetztank (7) gesammelt wurde, zum Bioreaktorsystem (5) zurückgeführt wird, um MLSS_{bio} anzuheben.

9. Ein Verfahren nach Anspruch 8, **dadurch gekennzeichnet, dass,** beim Umschalten von der erwähnten zweiten auf die erwähnte erste Art, die Menge weiterer Mischflüssigkeit im Absetztank (7) gesenkt wird, vorzugsweise bis der Absetztank (7) im Wesentlichen leer ist und dass der Absetztank (7), beim Umschalten von der erwähnten ersten auf die erwähnte zweite Art, wieder mit Bioreaktorabfluss gefüllt wird.

10. Ein Verfahren nach Anspruch 9, **dadurch gekennzeichnet, dass** bei der Befüllung des Absetztanks (7) zumindest ein Anteil des darin enthaltenen belebten Schlamms zum Membranfiltersystem (25) zurückgeführt wird, wobei die Zuführung von Bioreaktorabfluss zum Membranfiltersystem (25) vorzugsweise unterbrochen wird, wenn der belebte Schlamm aus dem Absetztank (7) zum Membranfiltersystem (25) zurückgeführt wird.

11. Ein Verfahren nach jedem der Ansprüche 8 bis 10, **dadurch gekennzeichnet, dass** der Absetztank (7) ein Fassungsvermögen hat, das größer als 10 %, vorzugsweise größer als 20 %, besser größer als 30 % der Menge der im erwähnten Bioreaktorsystem (5) enthaltenen Mischflüssigkeit ist.

12. Ein Verfahren nach jedem der Ansprüche 1 bis 11, **dadurch gekennzeichnet, dass** die Rückführung des im Membranfiltersystem (25) hergestellten Mischflüssigkeitsretentats zum Bioreaktorsystem (5) beim Umschalten von der erwähnten ersten auf die erwähnte zweite Art im Wesentlichen unterbrochen wird.

13. Ein Verfahren nach jedem der Ansprüche 1 bis 12, **dadurch gekennzeichnet, dass** das Membranfiltersystem zumindest einen Membranfiltertank (25) umfasst aber keinen zusätzlichen Bioreaktor, in dem biologische Umwandlungsprozesse stattfinden, sodass zusätzlicher belebter Schlamm hergestellt wird und dass das Absetztanksystem (7) vorzugsweise auch keinen zusätzlichen Bioreaktor umfasst, in dem biologische Umwandlungsprozesse stattfinden, sodass zusätzliche Flocken aus belebtem Schlamm hergestellt werden, wobei der dem Membranfiltertank (25) zugeführte Abfluss und der dem Absetztank (7) zugeführte Abfluss vorzugsweise im Wesentlichen dieselbe MLSS-Konzentration haben.

14. Eine Abwasseraufbereitungsanlage, die Folgendes umfasst:
- zumindest ein Bioreaktorsystem (5);
- Mittel (4) zur Zuführung des Abwassers bei einer Fließgeschwindigkeit Q_{inf} zum erwähnten Bioreaktorsystem (5) und zur Leitung des Abwassers in Form einer Mischflüssigkeit mit belebtem Schlamm durch das Bioreaktorsystem (5), um einen Bioreaktorabfluss herzustellen;
- Mittel zum Umschalten zwischen zwei Arten, auf die die Abwasseraufbereitung durchgeführt werden kann, nämlich eine erste Art, bei der die Abwasseraufbereitung für eine Fließgeschwindigkeit Q_{inf} durchgeführt wird, welche sich innerhalb eines ersten Bereichs befindet, und eine zweite Art, bei der die Abwasseraufbereitung für eine Fließgeschwindigkeit Q_{inf} durchgeführt wird, welche sich innerhalb eines höheren, zweiten Bereichs befindet;
- zumindest ein Membranfiltersystem (25), angeordnet, um Bioreaktorabfluss zu filtern, um einen gereinigten Abwasserstrom und ein Mischflüssigkeitsretentat herzustellen;
- Mittel (6, 31) zur Zuführung von zumindest einem Anteil des Bioreaktorabflusses zum Membranfiltersystem (25);
- Mittel (27) zur Rückführung von zumindest einem Anteil des erwähnten Mischflüssigkeitsretentats, das im Membranfiltersystem (25) hergestellt wurde, zum erwähnten Bioreaktorsystem (5);
- zumindest einen Absetztank (7), angeordnet, um Bioreaktorabfluss zu klären, um einen weiteren gereinigten Abwasserstrom und eine weitere Mischflüssigkeit herzustellen, welche abgesetzten belebten Schlamm enthält;
- Mittel (6, 32) zur Zuführung eines weiteren Anteils des Bioreaktorabflusses zum erwähnten Absetztank (7);
- Mittel (10) zur Rückführung von zumindest einem Anteil der erwähnten weiteren Mischflüssigkeit zum erwähnten Bioreaktorsystem (5),
**dadurch gekennzeichnet, dass**
die Anlage ferner Mittel zum Betrieb der Anlage gemäß dem Verfahren nach jedem der Ansprüche 1 bis 13 umfasst.

15. Eine Anlage nach Anspruch 14, **dadurch gekennzeichnet, dass** sie Mittel (6, 32) zur Befüllung des Absetztanks (7) mit Bioreaktorabfluss und zur Entleerung (10) des Absetztanks (7) in das Bioreaktorsystem (5) umfasst, wobei die Anlage vorzugsweise ferner Mittel (35) zur Rückführung eines Anteils des im Absetztank (7) enthaltenen belebten Schlamms zum Membranfiltersystem (25) umfasst.

## Revendications

1. Procédé de traitement d'eaux usées comprenant les étapes consistant :
- à alimenter un système de bioréacteur (5) en eaux usées à un débit Q_{inf},
- à guider les eaux usées sous la forme d'une liqueur mixte contenant de la boue activée à travers le système de bioréacteur (5), la liqueur mixte quittant ledit système de bioréateur (5) en tant qu'effluent du bioréacteur qui a une teneur en solides suspendus dans la liqueur mixte MLSS_{bio},
- à effectuer le traitement des eaux usées selon un premier mode, pour un débit Q_{inf} qui se trouve dans une première plage et selon un second mode pour un débit Q_{inf} qui se trouve dans une seconde plage plus élevée et à commuter entre les deux modes en fonction de la magnitude de Q_{inf}
- à fournir tant dans ledit premier que dans ledit second mode au moins une partie de l'effluent du bioréacteur à un système de filtration membranaire (25) dans lequel ladite partie de l'effluent du bioréacteur est filtrée pour produire un courant d'eaux usées purifiées à un débit Q_{eff,fl} et un rétentat de liqueur mixte qui a une teneur en solides suspendus dans la liqueur mixte MLSS_{fl},
- à recycler tant dans ledit premier que dans ledit second mode au moins une partie dudit rétentat de liqueur mixte à un débit Q_{r,fl} dans ledit système de bioréacteur (5), et
- à fournir au moins dans ledit second mode une partie supplémentaire de l'effluent du bioréacteur à un système de réservoirs de décantation (7) qui comprend au moins un réservoir de décantation dans lequel ladite partie supplémentaire de l'effluent du bioréacteur est clarifiée pour produire un courant supplémentaire d'eaux usées purifiées et une liqueur mixte supplémentaire contenant de la boue activée décantée, au moins une partie de la liqueur mixte supplémentaire étant recyclée à un débit Q_{r,st,bio} dans ledit système de bioréacteur (5),
**caractérisé en ce que**
quand on passe dudit premier audit second mode et vice-versa, MLSS_{bio} est ajustée afin que dans ledit premier mode, MLSS_{bio} soit plus grande que dans ledit second mode.

2. Procédé selon la revendication 1, **caractérisé en ce que,** quand on passe dudit premier audit second mode, le facteur de recyclage de la boue sur le système de filtration membranaire Q_{r,fl} / Q_{eff,fl} est diminué pour relever MLSS_{fl} et abaisser MLSS_{bio} ou vice-versa, et quand on passe dudit second audit premier mode, le facteur de recyclage de la boue sur le système de filtration membranaire Q_{r,fl} / Q_{eff,fl} est augmenté pour abaisser MLSS_{fl} et relever MLSS_{bio}.

3. Procédé selon la revendication 2, **caractérisé en ce que,** quand on passe dudit premier audit second mode, MLSS_{fl} est relevé d'au moins 10 %, de préférence d'au moins 20 % et plus préférablement d'au moins 30 %.

4. Procédé selon la revendication 2 ou 3, **caractérisé en ce que,** quand on passe dudit second audit premier mode, MLSS_{fl} est abaissé d'au moins 10 %, de préférence d'au moins 20 % et plus préférablement d'au moins 30 %.

5. Procédé selon l'une quelconque des revendications 1 à 4, **caractérisé en ce que** le système de filtration membranaire (25) contient un volume dudit rétentat de liqueur mixte qui est supérieur à 10 %, de préférence supérieur à 15 %, plus préférablement supérieur à 20 %, du volume de liqueur mixte contenue dans ledit système de bioréacteur (5).

6. Procédé selon l'une quelconque des revendications 1 à 5, **caractérisé en ce que** MLSS_{bio} est ajusté de telle manière que dans ledit premier mode, MLSS_{bo} soit au moins de 20 %, de préférence au moins de 30 %, et plus préférablement au moins de 40 % supérieur à une valeur de référence et de telle manière que dans ledit second mode, MLSS_{bio} soit au moins de 20 %, de préférence au moins de 30 %, et plus préférablement au moins de 40 % inférieure à ladite valeur de référence.

7. Procédé selon la revendication 6, **caractérisé en ce que** ladite valeur de référence est supérieure à 2 g / l, de préférence supérieure à 3g / l mais inférieure à 10 g / l, de préférence inférieure à 8 g / l.

8. Procédé selon l'une quelconque des revendications 1 à 7, **caractérisé en ce que,** quand on passe dudit second audit premier mode, au moins une partie de la boue activée, qui s'est accumulée dans le réservoir de décantation (7), est recyclée dans le système de bioréacteur (5) pour relever MLSS_{bio}.

9. Procédé selon la revendication 8, **caractérisé en ce que,** quand on passe dudit second audit premier mode, le volume de liqueur mixte supplémentaire contenu dans le réservoir de décantation (7) est abaissé, de préférence jusqu'à ce que le réservoir de décantation (7) soit pratiquement vide et, quand on passe dudit premier audit second mode, le réservoir de décantation (7) est à nouveau rempli avec l'effluent du bioréacteur.

10. Procédé selon la revendication 9, **caractérisé en ce que,** quand on remplit le réservoir de décantation (7), au moins une partie de la boue activée contenue dans celui-ci est recyclée dans le système de filtration membranaire (25), l'alimentation du système de filtration membranaire (25) en effluent du bioréacteur étant de préférence interrompue quand on recycle la boue activée provenant du réservoir de décantation (7) dans le système de filtration membranaire (25).

11. Procédé selon l'une quelconque des revendications 8 à 10, **caractérisé en ce que** le réservoir de décantation (7) a un volume qui est supérieur à 10 %, de préférence supérieur à 20 % et plus préférablement supérieur à 30 % du volume de liqueur mixte contenu dans ledit système de bioréacteur (5).

12. Procédé selon l'une quelconque des revendications 1 à 11, **caractérisé en ce que,** quand on passe dudit premier audit second mode, le recyclage du rétentat de liqueur mixte produit dans le système de filtration membranaire (25) dans le système de bioréacteur (5) est pratiquement interrompu.

13. Procédé selon l'une quelconque des revendications 1 à 12, **caractérisé en ce que** le système de filtration membranaire comprend au moins un réservoir de filtration membranaire (25) mais aucun bioréacteur additionnel dans lequel des processus de conversion biologique sont effectués afin que de la boue activée additionnelle soit produite et le système de réservoirs de décantation (7) ne comprend pas non plus de préférence un bioréacteur additionnel dans lequel des des processus de conversion biologique sont effectués afin que des flocons de boue activée soient produits, l'effluent fourni au réservoir de filtration membranaire (25) et l'effluent fourni au réservoir de décantation (7) ayant de préférence essentiellement la même teneur MLSS.

14. Installation de traitement d'eaux usées, comprenant :
- au moins un système de bioréacteur (5),
- des moyens (4) pour alimenter ledit système de bioréacteur (5) en eaux usées à un débit Q_{inf} et pour guider les eaux usées sous la forme d'une liqueur mixte contenant de la boue activée à travers le système de bioréacteur (5) pour produire un effluent de bioréacteur,
- moyens pour commuter entre deux modes dans lesquels le traitement des eaux usées peut être effectué, à savoir entre un premier mode dans lequel le traitement des eaux usées est effectué pour un débit Q_{inf} qui est dans une première plage et un second mode dans lequel le traitement des eaux usées est effectué pour un débit Q_{inf} qui est dans une seconde plage plus élevée,
- au moins un système de filtration membranaire (25) agencé pour filtrer l'effluent du bioréacteur pour produire un courant d'eaux usées purifiées et un rétentat de liqueur mixte,
- des moyens (6, 31) pour fournir au moins une partie de l'effluent du bioréacteur audit système de filtration membranaire (25),
- des moyens (27) pour recycler au moins une partie dudit rétentat de liqueur mixte produit dans le système de filtration membranaire (25) dans ledit système de bioréacteur (5),
- au moins un réservoir de décantation (7) agencé pour clarifier l'effluent du bioréacteur pour produire un courant supplémentaire d'eaux usées purifiées et une liqueur mixte supplémentaire contenant de la boue activée décantée,
- des moyens (6, 32) pour fournir une partie supplémentaire de l'effluent du bioréacteur audit réservoir de décantation (7),
- des moyens (10) pour recycler au moins une partie de ladite liqueur mixte supplémentaire dans ledit système de bioréacteur (5),
**caractérisé en ce que**
l'installation comprend en outre des moyens pour faire fonctionner l'installation conformément au procédé selon l'une quelconque des revendications 1 à 13.

15. Installation selon la revendication 14, **caractérisé en ce qu'**elle comprend des moyens (6, 32) pour remplir le réservoir de décantation (7) avec de l'effluent du bioréacteur et pour vider (10) le réservoir de décantation (7) dans le système de bioréacteur (5), l'installation comprenant de préférence en outre des moyens (35) pour recycler une partie de la boue activée contenue dans le réservoir de décantation (7) dans le système de filtration membranaire (25).
